# EUROPÄISCHE PATENTSCHRIFT

(11) **EP 1 156 303 B1**
(45) Veröffentlichungstag und Bekanntmachung des Hinweises auf die Patenterteilung: **25.07.2007**
(21) Anmeldenummer: 01111015.2
(22) Anmeldetag: 08.05.2001
(51) Int. Cl.: G01F 23/292, G01F 23/26

(54) **Vorrichtung zur Detektierung von Phasengrenzen zwischen unterschiedlichen Flüssigkeiten**
Device for detection of interfaces between different fluid layers
Disposotif pour la détection des interfaces entre des couches de fluides

(30) Priorität: 19.05.2000 DE 20009083 U
(43) Veröffentlichungstag der Anmeldung: 21.11.2001
(73) Patentinhaber: accelab Laborautomations-GmbH, 72127 Kusterdingen (DE)
(72) Erfinder: Winter, Martin Dr., 72076 Tübingen (DE); Maier, Harald, 72127 Kusterdingen (DE); Cyprian, Markus, 60598 Frankfurt (DE); Döbert, Helmut, 72762 Reutlingen (DE)
(74) Vertreter: Möbus, Daniela

(56) Entgegenhaltungen:
- DE-A- 4 218 899
- FR-A- 2 610 720
- US-A- 4 410 020
- US-A- 5 164 608
- US-A- 5 965 447

## Beschreibung

Das am häufigsten eingesetzte Verfahren zur Detektierung von Phasengrenzen zwischen unterschiedlichen Flüssigkeiten basiert auf der Bildverarbeitung mit einer Kamera. Die Kamera nimmt dabei ein Bild von dem die flüssigen Phasen enthaltenden Gefäß auf. Anschließend wird versucht, die Phasengrenzen zwischen den aneinander angrenzenden Flüssigkeitsphasen durch eine digitale Bildauswertung zu erkennen. Die digitalen Bildverarbeitungsverfahren arbeiten, insbesondere hei unscharfen Phasengrenzen, jedoch nicht mit der benötigten Zuverlässigkeit. Außerdem benötigen die digitalen Bildauswerteverfahren eine kostenaufwendige Hardware, einen relativ hohen Aufwand für die Entwicklung der Software und einen ziemlich hohen Rechenaufwand für die Algorithmen zur Bilderkennung bei sich häufig ändernden Substanzkombinationen. Außerdem behindern eventuell am die Flüssigkeiten enthaltenden Behälter aufgebrachte Etiketten die zuverlässige Bilderkennung mittels einer digitalen Kamera. Ferner muss der Behälter bei der digitalen Bildaufnahme um 360° gedreht werden.

Relativ gut bewährt haben sich auf kapazitiven Messprinzipien basierende Sensoren, jedoch sind diese Sensoren bei der Detektierung von Mischzonen problematisch.

Ein optischer Sensor zur Detektierung von Phasengrenzen zwischen verschiedenen Flüssigkeiten ist z.B, aus der US-A-5 164 608 bekannt.

Die Erfindung hat die Aufgabe, eine Vorrichtung zur Detektierung von Phasengrenzen dahin gehend zu verbessern, dass die oben genannten Nachteile zukünftig vermieden werden.

Die Erfindung löst die gestellte Aufgabe durch eine Vorrichtung zur Detektierung von ortsfesten Phasengrenzen zwischen unterschiedlichen Flüssigkeiten mit einem kapazitiven Sensor, wobei die erfindungsgemäße Vorrichtung außerdem einen optischen Sensor zur Detektierung der Phasengrenzen aufweist. Optische Sensoren können auch Flüssigkeitsphasen mit fast gleicher Farbe noch zuverlässig voneinander untersrheiden, bei gleichzeitig geringem Hardware- und Softwareaufwand. Außerdem können die die Flüssigkeit enthaltenden Gläser in einem Gestell stehen und müssen nicht mehr gedreht werden.

Der optische Sensor kann beispielsweise mindestens ein Licht aussendendes und mindestens ein Licht empfangendes Glasfaserbündel aufweisen. Bei dieser Anordnung wird durch das mindestens eine Licht empfangende Glasfaserbündel die Lichtmenge bestimmt, die von dem mindestens einen Licht aussendenden Glasfaserbündel ausgesendet und von der jeweiligen Phasengrenze über der sich der optische Sensor momentan befindet, reflektiert.

Der kapazitive Sensor kann, um zuverlässige Messergebnisse zu liefern, vorzugsweise in Wasser, kalibriert werden.

Die erfindungsgemäße Vorrichtung lässt sich bevorzugt zur sensorischen Überwachung von Flüssig-Flüssig-Extraktionen einsetzen.

Um dabei das Abpipettieren einer gewünschten Flüssigkeitsphase zu ermöglichen, kann der optische Sensor und/oder der kapazitive Sensor an eine Steuerung beispielsweise für eine Pipettiereinrichtung angeschlossen sein. Zum Abpipettieren von bestimmten Flüssigkeitsphasen eignet sich der optische Sensor zur Detektierung von Flüssigkeitsoberflächen, um Volumina und räumliche Lage der jeweiligen Flüssigkeitsphase zu bestimmen, besonders gut.

Vorteilhafterweise kann man durch einen PC die Steuerung für die Pipettiereinrichtung automatisieren.

Je nach Erfordernis kann der Arbeitspunkt des kapazitiven Sensors durch Veränderung der Schwellspannung individuell und automatisiert, beispielsweise durch einen PC, eingestellt werden.

Aus Gründen einer schnellen und zuverlässigen Signalauswertung kann diese digital, beispielsweise ebenfalls durch den PC, durchgeführt werden.

Besonders vorteilhaft ist es, wenn bei der digitalen Signalauswertung hauptsächlich die ersten Ableitungen der aufgenommenen Messkurven betrachtet werden, da somit absolute Verschiebungen in den Signalamplituden nicht relevant sind.

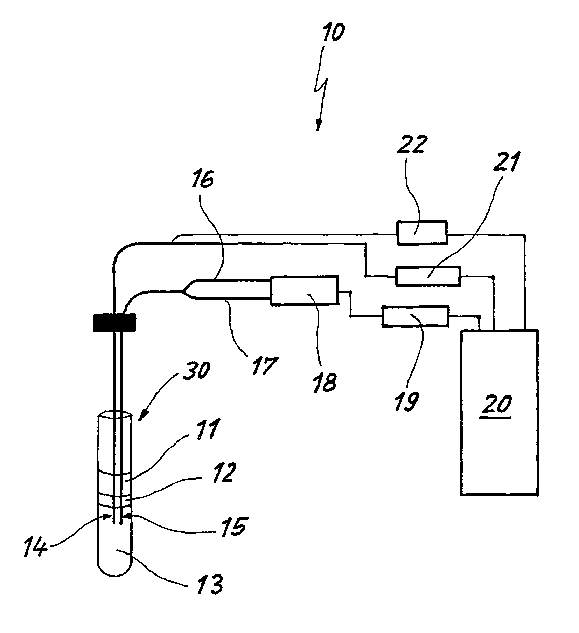

Nachfolgend wird ein Ausführungsbeispiel einer erfindungsgemä-ßen Vorrichtung anhand der beiliegenden Zeichnung näher erläutert.

Die einzige Zeichnung zeigt eine Vorrichtung 10 zur Detektierung von Phasengrenzen zwischen unterschiedlichen Flüssigkeiten 11, 12 und 13 in einem Gefäß 30. Sie weist einen kapazitiven Sensor 14 und einen optischen Sensor 15 auf, die in die Flüssigkeiten 11, 12, 13 eingetaucht sind. Der optische Sensor 15 besitzt ein Licht aussendendes Glasfaserbündel 16 und ein Licht empfangendes Glasfaserbündel 17. Das Licht empfangende Glasfaserbündel 17 nimmt die vom Licht aussendenden Glasfaserbündel 16 ausgesendete und von der Probe reflektierte Flüssigkeit Lichtmenge auf. Das aufgenommene Lichtsignal kann über einen Verstärker 18 und einen Analog/nigital-Mandler 19 an eine Steuerung, die beispielsweise ein PC sein kann, weitergegeben werden. Ebenso können die vom kapazitiven Sensor 14 aufgenommenen Messsignale über einen Analog/Digital-Wandler 21 an den PC 20 weitergegeben werden. über den PC 20 und einen Digital/Analog-Wandler 22 kann eine Schwellspannung zur Einstellung des Arbeitspunktes des kapazitiven Sensors 14 eingestellt werden. Außerdem eignet sich der PC 20 auch zur abschließenden Auswertung der digitalen Signale und zur Ansteuerung einer hier nicht gezeigten Pipettiereinrichtung.

## Patentansprüche

1. Vorrichtung (10) zur Detektierung von ortfesten Phasengrenzen zwischen unterschiedlichen Flüssigkeiten mit einem kapazitiven Sensor (14), **dadurch gekennzeichnet, dass** sie außerdem einen optischen Sensor (15) zur Detektierung der Phasengrenzen aufweist.

2. Vorrichtung (10) nach Anspruch 1, **dadurch gekennzeichnet, dass** der kapazitive Sensor (14) in einer Flüssigkeit, vorzugsweise in Wasser, kalibrierbar ist.

3. Vorrichtung (10) nach Anspruch 1 oder 2, **dadurch gekennzeichnet, dass** der optische Sensor (15) mindestens ein Licht aussendendes Glasfaserbündel (16) und mindestens ein Licht empfangendes Glasfaserbündel (17) aufweist.

4. Vorrichtung (10) nach einem der Ansprüche 1 bis 3, **dadurch gekennzeichnet, dass** der optische Sensor (15) in den Flüssigkeiten (11, 12, 13) anordenbar ist.

5. Vorrichtung (10) nach einem der Ansprüche 1 bis 4, **dadurch gekennzeichnet, dass** der optische Sensor (15) und/oder der kapazitive Sensor (14) an eine Steuerung (20), beispielsweise für eine Pipettiereinrichtung, angeschlossen ist.

6. Vorrichtung (10) nach Anspruch 5, **dadurch gekennzeichnet, dass** die Steuerung (20) ein PC ist.

7. Vorrichtung (10) nach einem der Ansprüche 1 bis 6, **dadurch gekennzeichnet, dass** die Empfindlichkeit des kapazitiven Sensors (14) einstellbar ist.

8. Vorrichtung (10) nach Anspruch 7, **dadurch gekennzeichnet, dass** die Empfindlichkeit des kapazitiven Sensors (14) durch Veränderung der Schwellspannung einstellbar ist.

9. Vorrichtung (10) nach einem der Ansprüche 1 bis 8, **dadurch gekennzeichnet, dass** sie eine digitale Signalauswerteschaltung (20) aufweist.

## Claims

1. Device (10) for detecting stationary phase boundaries between different fluids, comprising a capacitive sensor (14), **characterised in that** it also comprises an optical sensor (15) for detecting the phase boundaries.

2. Device (10) according to claim 1, **characterised in that** the capacitive sensor (14) can be calibrated in a fluid, preferably in water.

3. Device (10) according to claim 1 or 2, **characterised in that** the optical sensor (15) comprises at least one light-emitting glass fibre bundle (16) and at least one light-receiving glass fibre bundle (17).

4. Device (10) according to one of the claims 1 to 3, **characterised in that** the optical sensor (15) can be arranged in the fluids (11, 12, 13).

5. Device (10) according to one of the claims 1 to 4, **characterised in that** the optical sensor (15) and/or the capacitive sensor (14) is connected to a control system (20), for example, for a pipetting device.

6. Device (10) according to claim 5, **characterised in that** the control system (20) is a PC.

7. Device (10) according to one of the claims 1 to 6, **characterised in that** the sensitivity of the capacitive sensor (14) is adjustable.

8. Device (10) according to claim 7, **characterised in that** the sensitivity of the capacitive sensor (14) can be adjusted by changing the threshold voltage.

9. Device (10) according to one of the claims 1 to 8, **characterised in that** it comprises a digital signal evaluating circuit (20).

## Revendications

1. Dispositif (10) pour détecter des limites de phases fixes entre différents fluides, avec un capteur capacitif (14), **caractérisé en ce qu'**il comporte en plus un capteur optique (15) pour la détection des limites de phases.

2. Dispositif (10) selon la revendication 1, **caractérisé en ce que** le capteur capacitif (14) est étalonnable dans un fluide, de préférence dans de l'eau.

3. Dispositif (10) selon la revendication 1 ou 2, **caractérisé en ce que** le capteur optique (15) comporte au moins un faisceau de fibres de verre (16) émettant de la lumière et au moins un faisceau de fibres de verre (17) recevant de la lumière.

4. Dispositif (10) selon une des revendications 1 à 3, **caractérisé en ce que** le capteur optique (15) peut être disposé dans les fluides (11, 12, 13).

5. Dispositif (10) selon une des revendications 1 à 4, **caractérisé en ce que** le capteur optique (15) et/ou le capteur capacitif (14) sont reliés à une commande (20), par exemple à un dispositif de pipetage.

6. Dispositif (10) selon la revendication 5, **caractérisé en ce que** la commande (20) est un PC.

7. Dispositif (10) selon une des revendications 1 à 6, **caractérisé en ce que** la sensibilité du capteur capacitif (14) est réglable.

8. Dispositif (10) selon la revendication 7, **caractérisé en ce que** la sensibilité du capteur capacitif (14) est réglable en modifiant la tension de seuil.

9. Dispositif (10) selon une des revendications 1 à 8, **caractérisé en ce qu'**il comporte un circuit numérique d'analyse de signaux (20).
